Europäisches Patentamt

European Patent Office

Office européen des brevets

(19)

(11) Veröffentlichungsnummer: **0 052 078**
**B1**

(12) **EUROPÄISCHE PATENTSCHRIFT**

(45) Veröffentlichungstag der Patentschrift:
20.03.85

(51) Int. Cl.⁴: **C 11 B 1/10, A 23 L 1/31**

(21) Anmeldenummer: **81810446.5**

(22) Anmeldetag: **06.11.81**

(54) Verfahren zum Entfetten einer konsistenten, feinteiliges Fleisch und Wasser enthaltenden Masse.

(30) Priorität: **06.11.80  CH 8256/80**

(43) Veröffentlichungstag der Anmeldung:
**19.05.82 Patentblatt 82/20**

(45) Bekanntmachung des Hinweises auf die Patenterteilung:
**20.03.85 Patentblatt 85/12**

(84) Benannte Vertragsstaaten:
**AT BE CH DE FR GB IT LI NL SE**

(56) Entgegenhaltungen:
**EP - A - 0 014 685**
**FR - A - 2 141 707**
**FR - A - 2 211 528**

**W. Wittenberger, "Chemische Betriebstechnik", 3.**
**Auflage, 1974, Springer-Verlag, Wien, S. 279**

(73) Patentinhaber: **Haussener, Ernst, Dorfstrasse 35,**
**CH-3073 Gümligen (Kanton Bern) (CH)**

(72) Erfinder: **Schneider, Fred, Waldhausweg 28,**
**CH-3073 Gümligen (CH)**
Erfinder: **Haussener, Ernst, Dorfstrasse 35,**
**CH-3073 Gümligen (CH)**

(74) Vertreter: **Schoch, Willy et al, Bovard AG Patentanwälte**
**VSP Optingenstrasse 16, CH-3000 Bern 25 (CH)**

## Beschreibung

Die vorliegende Erfindung bezieht sich auf ein Verfahren zum Entfetten einer konsistenten, feinteiliges Fleisch und Wasser enthaltenden Masse durch Extraktion mit einem Gas in überkritischem Zustand in einer statischen Kolonne ohne Kreislauf und auf die Anwendung des Verfahrens zum Entfetten von aus automatischen Fleisch/Knochen-Separatoren anfallenden Fleischmassen für deren Verwertung in der Humanernährung.

Es ist bekannt, dass Gase in überkritischem Zustand Lösungsmittel für Fette und Öle darstellen. Ein Verfahren zur Gewinnung von Pflanzenfetten und -ölen wird in der CH-A 565 238 beschrieben, wobei Kohlendioxid in überkritischem Zustand in einer Kreislaufextraktion als Extraktionsmittel eingesetzt wird.

In der europäischen Patentschrift 0 014 685 wird ein ähnliches Verfahren zur Gewinnung und/oder Raffination von tierischen Fetten beschrieben, wobei die Extraktion mit einem Gas in überkritischem Zustand erfolgt und in einer statischen Kolonne ohne Kreislauf ausgeführt wird. Auch in diesem Fall wird als Gas vorzugsweise Kohlendioxid eingesetzt.

In der modernen Fleischverarbeitung gelangt in den letzten Jahren vermehrt ein moderner Maschinenpark zum Einsatz. Im Zusammenhang mit der vorliegenden Erfindung sind die bekannten automatischen Knochen/Fleisch-Separatoren, wie sie beispielsweise von Paoli, Illinois, USA, hergestellt werden und in den US-A 3 266 542/3 beschrieben sind, von besonderer Bedeutung. Solche Separatoren sind automatische Entbeinungsmaschinen, in denen das aufwendige Entbeinen von Hand mit dem Messer vollautomatisch maschinell ausgeführt werden kann. Dies ergibt bei wesentlich kürzerer Bearbeitungsdauer eine höhere Fleischausbeute und lässt sich auf alle Fleischsorten, einschliesslich Fischereiprodukte und Geflügel, anwenden. Die Steigerung der Fleischausbeute kann wesentlich zur Lösung des Proteinproblems in der Welternährung beitragen, da beim manuellen Entbeinen grosse Mengen von anhaftenden Fleischfasern mit den Knochen verworfen werden. Ein Nachteil solcher Separatoren ist jedoch die Form, in der das von den Knochen getrennte Fleisch anfällt. In den meisten Fällen handelt es sich um eine konsistente, feinteiliges Fleisch und Wasser enthaltende Masse, ähnlich Brät, mit relativ hohem Wasser- und Fettgehalt. Diese Fleischmasse enthält in Abhängigkeit von der Fleischsorte etwa 10 Gew.% Roheiweiss und 25 Gew.% Fett und ist somit anfällig auf bakteriologische Infektion. In jedem Fall sind in derartigen Massen die mit $Q_1$, $Q_2$ und $Q_3$ bezeichneten fleischtechnologischen Parameter ungünstig und lassen eine direkte Weiterverarbeitung zu Wurstwaren nur bedingt zu, da den modernen fleischtechnologischen Fragen heute auch von der gesetzgeberischen Seite aus vermehrte Beachtung geschenkt wird. Die genannten, allgemein üblichen fleischtechnologischen Parameter $Q_1$ bis $Q_3$ sind Verhältniszahlen und bezeichnen die folgenden Verhältnisse:

$Q_1$ = Wasser : Stickstoffsubstanz (Protein)
$Q_2$ = Fett : Stickstoffsubstanz (Protein)
$Q_3$ = Bindegewebe : Stickstoffsubstanz (Protein).

In der Ernährung kommt dem Verhältnis von Fett zu Protein bzw. Trockensubstanz, insbesondere bei Wurst- und Fleischwaren, eine äusserst wichtige Bedeutung zu. Obwohl das Fett neben Wasser den billigsten Bestandteil von Fleischwaren darstellt, ist ernährungstechnisch festzuhalten, dass durch die moderne Zucht und Tierernährung unsere heutigen Fleische und Fleischwaren gegenüber früher wesentlich fetthaltiger geworden sind und sich nicht mehr mit den modernen Ernährungstheorien vereinbaren lassen.

Aus dem Vorstehenden ergibt sich, dass grosses Interesse daran vorhanden ist, von Separatoren anfallende Fleischmassen solcherart zu entfetten, dass die Fleischmasse danach ohne Bedenken direkt der Humanernährung, beispielsweise der Wursterei, zugeführt werden kann.

Die vorstehend angeführten bekannten Verfahren zur Entfettung mittels überkritischen Gasen können jedoch für derartige Zwecke nicht eingesetzt werden. Die konsistente, feinteiliges Fleisch und Wasser enthaltende Masse ist zu kompakt, um den benötigten Kontakt zwischen dem Gas als Extraktionsmittel und dem zu extrahierenden Fleisch ohne Kanalbildung zu gewährleisten.

Es ist Aufgabe der vorliegenden Erfindung, ein Verfahren zu schaffen, das es erlaubt, maschinell entbeinte Fleischmassen auf einfache und ökonomische Art mit relativ geringem Zeitaufwand ganz oder teilweise solcherart zu entfetten, dass die Masse der Weiterverarbeitung zur Humanernährung zugeführt werden kann.

Diese Aufgabe wird durch das erfindungsgemässe Verfahren, das im Patentanspruch 1 definiert ist, gelöst.

Die Extraktionsbehandlung im erfindungsgemässen Verfahren erfolgt nach dem in den Patentansprüchen 1 und 2 der bereits genannten europäischen Patentschrift 0 014 685 definierten Verfahren, vorzugsweise unter Verwendung von Kohlendioxid als Extraktionsgas, wobei jedoch auch die in den Patentansprüchen 4–6 der genannten Patentschrift angeführten und auch andere gesundheitlich und chemisch unbedenklichen Gase unter der Voraussetzung verwendet werden können, dass ihre kritischen Daten, die aus der Literatur bekannt sind, in die durch das Extraktionsgut bestimmten Druck- und Temperaturbereiche fallen.

Als Alternativen zum Vermischen der Masse mit einem strukturierten Lebensmittel kann die Masse vor der Extraktionsbehandlung auch im Vakuum vorgetrocknet und granuliert oder angebraten werden. Gegenüber dem Vermischen mit einem strukturierten Lebensmittel wird das Verfahren jedoch hierdurch aufwendiger, und ausserdem können Eiweissqualität und Wasserbindevermögen des Endproduktes durch die länger dauernde Wärmeeinwirkung beeinflusst werden.

Strukturierte Lebensmittel sind beispielsweise Gemüse, das am Stück oder in zerkleinerter Form zum Einsatz gelangen kann, ganzes oder gebrochenes Getreide, harte Früchte in frischem oder getrocknetem Zustand, Kartoffeln oder Grieben. Besonders zweckmässig ist es, als strukturiertes Lebensmittel Grieben einzusetzen, die bei Ausführung des Beispiels 1 der vorstehend genannten europäischen Patentschrift als Extraktionsrückstand anfallen. Vorzugsweise wird als strukturiertes Lebensmittel ein arteigenes Produkt, wie weiche Grieben oder Hackfleisch verwendet, so dass das Endprodukt direkt der Snacks-, Wurst- oder allgemeinen Lebensmittelindustrie zugeführt werden kann. Durch Einsatz entsprechender Ingredienzien als strukturiertes Lebensmittel ist es ohne weiteres möglich, Nahrungsfertigprodukte bzw. Fertigmahlzeiten herzustellen, wie Chili con carne, Fleisch und Bohnen, Sauce Bolognaise, wie auch verschiedene Formulierungen zur Haustierernährung, wie Katzen- und Hundefutter. Als zusätzliches strukturgebendes Mittel kann auch eine mit Lebens- oder Futtermitteln verträgliche und zulässige Fremdsubstanz, beispielsweise Sägemehl, verwendet werden.

Im Nachstehenden wird eine bevorzugte Ausführungsform der Erfindung beispielsweise erläutert:

Beispiel 1

Die aus einer maschinellen Entbeinungseinrichtung anfallende Fleischmasse wird mit 20–100 Gew.%, bezogen auf das Gewicht der Fleischmasse, eines strukturierten Lebensmittels homogen vermischt und dann nach dem in der europäischen Patentschrift 0 014 685 beschriebenen Verfahren mit überkritischem Kohlendioxid während einer Extraktionsdauer von 10–120 min teilweise oder vollständig entfettet. Das erhaltene Endprodukt kann direkt der Wursterei zugeführt oder zu anderen Fertigprodukten, beispielsweise «Hamburgern» weiterverarbeitet werden. Es erfüllt die Bedingungen der Lebensmittelgesetzgebung und ist durch den reduzierten Fettgehalt von wesentlich verbesserter Qualität.

Beispiel 2

Nach dem vorstehend beschriebenen Vorgehen wurden 400 g aus einem Paoli-Separator anfallende Fleischmasse mit 400 g von nach Beispiel 1 der europäischen Patentschrift 0 014 685 als Extraktionsrückstand anfallenden Grieben mechanisch homogen vermischt und in der Einrichtung und nach dem Verfahren, wie in der genannten europäischen Patentschrift beschrieben, mit trockenem Kohlendioxid bei 65°C unter Druck von 150 bar während 90 min extrahiert.

Es wurden 138 g Fett gewonnen. Dieser Extraktionsrückstand wurde direkt nach üblichen Verfahren gewürzt und durch Ausbacken in Öl zu «Hamburgern» weiterverarbeitet.

Die erhaltenen «Hamburger» können nach dem Ausbacken nochmals nach demselben Verfahren entfettet werden. bei 150 bar und 65°C werden auch die beim Backen aufgenommenen Fette oder Öle innerhalb 90–180 min grösstenteils wieder entfernt. Restfettgehalte betragen 2–8 Gew.%. Der erhaltene Extraktionsrückstand zeigt bei einem Restfettgehalt von 8–15 Gew.% folgende bakteriologische Untersuchungsresultate:

Salmonellen/20 g              : keine
    Aerobe Gesamtkeimzahl/g       : 100
    Enterobakteriazeen/g          : unter 100
    Staphylokokken/g              : unter 100
Die bakteriologische Qualität ist somit ausgezeichnet.

Beispiel 3

700 g von den nach Beispiel 1 der europäischen Patentschrift 0 014 685 als Extraktionsrückstand anfallenden Grieben wurden in einer Bratpfanne unter Zugabe von 50 g Speiseöl kurz angebraten. Die angebratene Fleischmasse wurde nach dem Abkühlen mit trockenem Kohlendioxid nach dem in der genannten europäischen Patentschrift 0 014 685 beschriebenen Verfahren bei 150 bar und 57°C während 150 min extrahiert. Es wurden 26 Gew.% einer Fettfraktion gewonnen. Der Restfettgehalt der gebratenen Fleischmasse lag unter 2 Gew.%.

Beispiel 4

883 g einer extrahierten Fleischmasse wurden im Vakuum zu einer Substanz mit 56 Gew.% Festkörpergehalt vorgetrocknet und granuliert. Die so vorgetrocknete granulierte Fleischmasse wurde erneut wie vorstehend beschrieben, extrahiert. Es resultierten 24 Gew.% einer Fettfraktion entsprechend einer Entfettung von über 95 %.

**Patentansprüche**

1. Verfahren zum Entfetten einer konsistenten, feinteiliges Fleisch und Wasser enthaltenden Masse durch Extraktion mit einem Gas in überkritischem Zustand in einer statischen Kolonne ohne Kreislauf, dadurch gekennzeichnet, dass man die Masse vor der Extraktionsbehandlung entweder
a) homogen mit einem strukturierten Lebensmittel vermischt, oder
b) im Vakuum vortrocknet und granuliert, oder
c) anbratet.
2. Verfahren nach Anspruch 1, dadurch gekennzeichnet, dass man als Gas Kohlendioxid verwendet.
3. Verfahren nach Anspruch 1 oder 2, dadurch gekennzeichnet, dass man als strukturiertes Lebensmittel Grieben verwendet.
4. Verfahren nach Anspruch 1 oder 2, dadurch gekennzeichnet, dass man als strukturiertes Lebensmittel gegebenenfalls zerkleinertes Gemüse, einschliesslich Kartoffeln, verwendet.
5. Verfahren nach Anspruch 1 oder 2, dadurch gekennzeichnet, dass man als strukturiertes Lebensmittel gegebenenfalls gebrochenes Getreide verwendet.
6. Verfahren nach Anspruch 1 oder 2, dadurch gekennzeichnet, dass man als strukturiertes Lebensmittel die zur Formulierung einer Fertigmahlzeit benötigten Ingredienzien verwendet.

7. Verfahren nach Anspruch 1 oder 2, dadurch gekennzeichnet, dass man als strukturiertes Mittel eine mit Lebens- oder Futtermitteln verträgliche und zulässige Fremdsubstanz verwendet.

8. Anwendung des Verfahrens nach Anspruch 1 zum Entfetten von aus automatischen Fleisch/Knochen-Separatoren anfallenden Fleischmassen für deren Verwertung in der Humanernährung.

## Claims

1. Process for removing fat from a consistent mass containing finely-divided meat and water by extraction with a gas in a hypercritical state in a static column without circulation, characterized in that prior to the extraction treatment, the mass is either
a) mixed homogeneously with a structured foodstuff or
b) pre-dried in vacuo and granulated or
c) fried.

2. Process according to claim 1, characterized in that carbon dioxide is used as the gas.

3. Process according to claim 1 or 2, characterized in that crackling is used as the structured foodstuff.

4. Process according to claim 1 or 2, characterized in that vegetables, including potatoes, optionally chopped, are used as the structured foodstuff.

5. Process according to claim 1 or 2, characterized in that grain, optionally crushed, is used as the structured foodstuff.

6. Process according to claim 1 or 2, characterized in that the ingredients needed for formulating a ready-to-eat meal are used as the structured foodstuff.

7. Process according to claim 1 or 2, characterized in that a foreign substance compatible and permissible with foodstuffs for human beings or animals is used as an additional structure-imparting agent.

8. Application of the process according to claim 1 for removing fat from meat masses obtained from automatic meat-bone separators for utilization of such masses in human nutrition.

## Revendications

1. Procédé pour dégraisser une masse consistante contenant une viande à fines particules et de l'eau, par extraction au moyen d'un gaz dans un état supérieur à l'état critique, dans une colonne statique sans circulation, caractérisé en ce que, avant de procéder à l'extraction,
a) on mélange de façon homogène ladite masse avec un produit alimentaire structuré,
b) on l'assèche préalablement dans le vide et on le granule, ou
c) on le rôtit légèrement.

2. Procédé selon la revendication 1, caractérisé en ce qu'on utilise, comme gaz, le bioxyde de carbure.

3. Procédé selon la revendication 1 ou la revendication 2, caractérisé en ce qu'on utilise, comme produit alimentaire structuré, des greubons.

4. Procédé selon la revendication 1 ou la revendication 2, caractérisé en ce qu'on utilise, comme produit alimentaire structuré, des légumes, pommes de terre incluses, réduits en particules.

5. Procédé selon la revendication 1 ou la revendication 2, caractérisé en ce qu'on utilise, comme produit alimentaire structuré, des céréales hachées.

6. Procédé selon la revendication 1 ou la revendication 2, caractérisé en ce qu'on utilise, comme produit alimentaire structuré des ingrédients nécessaires à la composition d'un repas complet.

7. Procédé selon la revendication 1 ou la revendication 2, caractérisé en ce qu'on utilise, comme moyen structurant supplémentaire une substance étrangère compatible avec des produits alimentaires ou des fourrages.

8. Application du procédé selon la revendication 1 au dégraissage de masses issues de séparateurs automatiques séparant la viande et les os, en vue de leur utilisation pour l'alimentation humaine.